# EUROPEAN PATENT APPLICATION

(11) **EP 4 610 420 A1**
(43) Date of publication of application: **03.09.2025**
(21) Application number: 23872862.0
(22) Date of filing: 12.09.2023
(51) Int. Cl.: D06F 34/34, D06F 34/30, D06F 34/32, D06F 34/05, D06F 33/32, D06F 33/52, D06F 101/00, D06F 105/52, D06F 105/58

(54) **LAUNDRY TREATING APPARATUS AND CONTROL METHOD FOR SAME**

(30) Priority: 27.09.2022 KR 20220122839
(71) Applicant: LG Electronics Inc., Yeongdeungpo-gu Seoul 07336 (KR)
(72) Inventor: SEO, Kyunghye, Seoul 08592 (KR); SON, Howon, Seoul 08592 (KR); KIM, Jungchul, Seoul 08592 (KR)
(74) Representative: Ter Meer Steinmeister & Partner
(86) International application number: PCT/KR2023/013637
(87) International publication number: WO 2024/071743

(57) **Abstract**

A laundry treating apparatus and a control method for the same are disclosed. The laundry treating apparatus according to one embodiment of the present invention comprises: a cabinet; a drum, which is provided to be rotatable inside the cabinet and accommodates laundry; and a screen output unit, which is provided in the cabinet and outputs a screen, wherein the screen output unit outputs a course setting screen including a suggestion area in which an option that can be changed or additionally applied in a course for laundry treatment is presented and, if the suggestion area is selected, the setting value of the option is changed or the option is additionally applied and displayed on the course setting screen.

## Description

### [Technical Field]

The present disclosure relates to a laundry treating apparatus and a method for controlling the same, and more particularly, to a laundry treating apparatus including a screen outputter on which a screen is output and a method for controlling the same.

### [Background]

A laundry treating apparatus is an apparatus that removes contamination from laundry by putting clothes, bedding, and the like (hereinafter, referred to as the laundry) into a drum. The laundry treating apparatus may perform processes such as washing, rinsing, dehydration, drying, and the like, and the laundry treating apparatus may be categorized into a top loading scheme and a front loading scheme based on a scheme of putting the laundry into the drum.

The laundry treating apparatus may include a housing forming an outer appearance thereof, a tub accommodated in the housing, the drum rotatably mounted inside the tub and into which the laundry is put, and a detergent supply that supplies detergent into the drum.

When the drum is rotated by a motor in a state in which washing water is supplied to the laundry accommodated therein, dirt on the laundry may be removed by friction between the drum and washing water.

The detergent supply is equipped with a detergent supply function to improve a washing effect. In this regard, the detergent refers to a material that enhances the washing effect, such as fiber detergent, a fiber softener, and a fiber bleach. As the detergent, detergent in a form of powder or detergent in a form of liquid may be used.

In one example, the laundry treating apparatus may perform a course setting process for setting a course for treating the laundry. A plurality of courses may be set in advance via a controller, and in the course setting process, a user may select any of the plurality of courses to treat the laundry.

In the course setting process, various options for the course may be set. For example, the various options include an adjustable option in which one option value is necessarily determined in the course and the option value is adjustable by the user, such as a washing strength option, a rinsing number option, and the like.

In addition, the various options include a simple additional option in which application or non-application of the course may be determined by the user, such as a steam option. In addition, the various options include an adjustable additional option in which not only the application or the non-application of the course is determined by the user, but also the option value is also selected by the user, such as a reservation option.

In one example, Korean Patent Application Publication No. 10-2014-0023986 discloses a laundry treating apparatus including an outputter for providing information to the user and an inputter for generating an input signal based on manipulation of the user.

The outputter may include a screen outputter that outputs a screen, and the screen may display a course to be performed and/or whether to apply various options for the course or setting states thereof in the course setting process.

The user may identify the course to be performed and the option setting state of the corresponding course via information provided on the screen, and may change the course or change the option setting state of the corresponding course via the inputter.

However, a process of selecting one of the plurality of courses, a process of setting whether to apply the option, or a process of changing a setting value of the option may require various or multiple manipulations on the inputter. As the manipulation process for completing the setting of the course desired by the user is more complicated, ease of use for the user may be reduced.

In addition, current environments and conditions for treating the laundry may be various. Furthermore, there may be a setting state that is more advantageous than the setting state of the course recognized by the user, but nevertheless, the user may not specifically recognize or pay attention to various environments or advantageous settings.

Accordingly, it is an important task in the art to effectively provide more efficient and convenient course setting for the laundry treatment process and to simply and conveniently provide a complex process for the course setting to the user.

### [Summary]

### [Technical Problem]

Embodiments of the present disclosure are to provide a laundry treating apparatus that may effectively improve convenience of use in setting a course, and a method for controlling the same.

In addition, embodiments of the present disclosure are to provide a laundry treating apparatus that may effectively shorten a course setting process, and a method for controlling the same.

In addition, embodiments of the present disclosure are to provide a laundry treating apparatus that may provide a convenient and efficient course setting state to a user, and a method for controlling the same.

In addition, embodiments of the present disclosure are to provide a laundry treating apparatus that may suggest course setting advantageous for a user so as to be conveniently identified by the user, and a method for controlling the same.

In addition, embodiments of the present disclosure are to provide a laundry treating apparatus that provides a screen for conveniently checking a setting state of a course, and a method for controlling the same.

In addition, embodiments of the present disclosure are to provide a laundry treating apparatus that may effectively suggest option setting of a course and enable convenient setting and a method for controlling the same.

### [Technical Solutions]

An embodiment of the present disclosure includes a screen outputter disposed on a cabinet. The screen outputter may include a display that is equipped as an LCD or the like to output a screen. The screen outputter may output a course setting screen that provides setting information of a course in a course setting process for treating laundry.

A plurality of areas may be defined in the course setting screen, and one of the plurality of areas may be a suggestion area for helping course setting of a user. In the suggestion area, an option that may be additionally applied to the course currently displayed on the course setting screen may be displayed.

In one example, an option that may be changed or additionally applied in a course displayed on the course setting screen may be displayed in the suggestion area. The suggestion area may be displayed on the screen to suggest to the user a change of a setting value of the corresponding option or additional application of the corresponding option.

When the suggestion area is selected by the user, the option displayed in the suggestion area may be changed or may be additionally applied to the course based on suggestion content. That is, an embodiment of the present disclosure may suggest the change or the addition of the option necessary for the user or effective for treating the laundry via the suggestion area on the course setting screen for setting the course, and may allow the change or the addition of the option to be conveniently made via simple selection of the suggestion area.

A laundry treating apparatus according to an embodiment of the present disclosure as such includes a cabinet, a drum, and a screen outputter. The drum may be rotatably disposed inside the cabinet and constructed to accommodate laundry therein. The screen outputter may be disposed on the cabinet and output a screen.

The screen outputter may output a course setting screen including a suggestion area where an option changeable or additionally applicable in a course for treating the laundry is presented, and when the suggestion area is selected, a setting value of the option may be changed or the option may be additionally applied on the course setting screen.

The course setting screen may further include an indicator area where an indicator corresponding to the option appears when the option is additionally applied.

The course setting screen may further include an option setting area where the setting value of the option changed as the suggestion area is selected is displayed. The screen outputter may display a suggestion reflected state for the option in the suggestion area when the suggestion area is selected.

The screen outputter may display a suggestion non-reflected state for the option when the suggestion area is selected again while the suggestion reflected state is displayed. A suggestion indicator indicating the option may be displayed in the suggestion area, and the suggestion indicator may be displayed as different images before and after the selection of the suggestion area.

The suggestion indicator may have different colors in an active state and an inactive state of the suggestion area. The suggestion indicator may be displayed as a flickering motion with different colors alternately applied when the suggestion area is selected.

A suggestion indicator indicating the option and a suggestion phrase for suggesting the option may be displayed in the suggestion area. The suggestion indicator may be defined by including at least a part of the suggestion phrase. The suggestion indicator may include a border for distinguishing the at least part of the suggestion phrase and a rest thereof from each other.

The screen outputter may sense a touch signal of a user for the screen, and when the touch signal is generated in at least a portion of the suggestion area, the setting value of the option may be changed or the option may be additionally applied and displayed.

An embodiment of the present disclosure may further include an inputter that is disposed on the cabinet and generates an input signal of a user for selecting the suggestion area, and may further include a button assembly disposed on the cabinet and manipulated by a user to generate an input signal. The suggestion area may be selected based on the input signal.

The screen outputter may display suggestion content including a name of the option or a phrase suggesting the option in the suggestion area, and the suggestion content may include a plurality of suggestion content having different suggestion conditions to be displayed in the suggestion area.

When a plurality of suggestion content among the plurality of suggestion content satisfy respective suggestion conditions thereof, one may be displayed in the suggestion area based on a priority. The suggestion content may satisfy the suggestion condition when a current time corresponds to a specific time range within a one year cycle.

The specific time range may include at least a portion of July, and the option may correspond to a steam option for the course. The suggestion content may satisfy the suggestion condition when a current time corresponds to a specific time range having a one week cycle.

The specific time range may include at least Sunday, and a washing strength of the course may be increased when the suggestion area is selected. The suggestion content may satisfy the suggestion condition when a current time corresponds to a specific time range having a one day cycle, and when the suggestion area is selected, a washing strength of the course may be reduced.

In one example, in a laundry treating apparatus according to an embodiment of the present disclosure, the screen outputter may output a course setting screen including a suggestion area where an option changeable or releasably applied in a course for treating the laundry is presented, and when the suggestion area is selected, a setting value of the option may be changed or the option may be released and displayed.

In one example, a method for controlling a laundry treating apparatus according to an embodiment of the present disclosure includes a course setting operation, a suggestion operation, and a suggestion application operation.

The course setting operation includes outputting a course setting screen where a course for treating the laundry is displayed via the screen outputter. The suggestion operation includes displaying suggestion content presenting an option changeable or additionally applicable in the course in a suggestion area of the course setting screen.

The suggestion application operation includes changing a setting value of the option or additionally applying the option on the course setting screen when the suggestion area is selected.

The suggestion operation may include a suggestion condition determination operation. In the suggestion condition determination operation, a controller may determine whether a suggestion condition for displaying the suggestion content in the suggestion area is satisfied.

The suggestion content may include a plurality of suggestion content and the controller may store the plurality of suggestion content therein, and in the suggestion condition determination operation, the controller may determine whether a suggestion condition of each of the plurality of suggestion content is satisfied.

The suggestion operation may further include a suggestion display operation. In the suggestion display operation, the controller may control the screen outputter such that suggestion content satisfying a suggestion condition thereof among the plurality of suggestion content in the suggestion condition determination operation is displayed in the suggestion area.

In the suggestion display operation, when there are a plurality of suggestion content satisfying respective suggestion conditions thereof, the controller may display only one in the suggestion area based on a preset priority condition.

In the suggestion application operation, the controller may control the screen outputter such that an image of the suggestion area is changed by a reflection state of the suggestion content.

In the suggestion application operation, the controller may control the screen outputter such that a color of a suggestion indicator indicating the option in the suggestion area is changed when the suggestion content is reflected.

### [Advantageous Effects]

The embodiments of the present disclosure may provide the laundry treating apparatus that may effectively improve the convenience of use in setting the course, and the method for controlling the same.

In addition, the embodiments of the present disclosure may provide the laundry treating apparatus that may effectively shorten the course setting process, and the method for controlling the same.

In addition, the embodiments of the present disclosure may provide the laundry treating apparatus that may provide the convenient and efficient course setting state to the user, and the method for controlling the same.

In addition, the embodiments of the present disclosure may provide the laundry treating apparatus that may suggest the course setting advantageous for the user so as to be conveniently identified by the user, and the method for controlling the same.

In addition, the embodiments of the present disclosure may provide the laundry treating apparatus that provides the screen for conveniently checking the setting state of the course, and the method for controlling the same.

In addition, the embodiments of the present disclosure may provide the laundry treating apparatus that may effectively suggest the option setting of the course and enable the convenient setting and the method for controlling the same.

### [Brief Description of the Drawings]

FIG. 1 is a perspective view illustrating an outer appearance of a laundry treating apparatus according to an embodiment of the present disclosure.
FIG. 2 is a cross-sectional view showing interior of a laundry treating apparatus according to an embodiment of the present disclosure.
FIG. 3 is a diagram schematically illustrating an information exchange scheme of a laundry treating apparatus in an embodiment of the present disclosure.
FIG. 4 is a perspective view showing an outer appearance of a laundry treating apparatus in which a first treating apparatus and a second treating apparatus are stacked in an embodiment of the present disclosure.
FIG. 5 is a side view of a laundry treating apparatus in FIG. 4.
FIG. 6 is a conceptual diagram illustrating control connection relationships of a first treating apparatus, a second treating apparatus, and a screen outputter in a laundry treating apparatus in FIG. 4.
FIG. 7 is a diagram illustrating a control panel of a laundry treating apparatus according to an embodiment of the present disclosure.
FIG. 8 is an operational conceptual diagram illustrating processes from power application to course execution of a laundry treating apparatus in an embodiment of the present disclosure.
FIG. 9 is a diagram illustrating a start screen among screens output via a screen outputter in an embodiment of the present disclosure.
FIG. 10 is a diagram illustrating a course setting screen among screens output via a screen outputter in an embodiment of the present disclosure.
FIG. 11 is a diagram showing a course progress screen among screens output via a screen outputter in an embodiment of the present disclosure.
FIG. 12 is a conceptual diagram illustrating relationships between a plurality of courses and various options in an embodiment of the present disclosure.
FIG. 13 is a diagram illustrating a course setting screen on which suggestion content is displayed via a suggestion area in an embodiment of the present disclosure.
FIG. 14 is a diagram illustrating a course setting screen on which an option is suggested via a suggestion area in an embodiment of the present disclosure.
FIG. 15 is a diagram showing a course setting screen on which a change in an adjustable option is suggested via a suggestion area in an embodiment of the present disclosure.
FIG. 16 is a diagram illustrating a course setting screen on which application of a simple additional option is suggested via a suggestion area in an embodiment of the present disclosure.
FIG. 17 is a diagram illustrating a process of changing an adjustable option in a general setting scheme in an embodiment of the present disclosure.
FIG. 18 is a diagram illustrating a control panel in which an additional function screen is output on a screen outputter in an embodiment of the present disclosure.
FIG. 19 is a diagram illustrating a process of setting a simple additional option via an additional function screen in an embodiment of the present disclosure.
FIG. 20 is a diagram illustrating a method for controlling a laundry treating apparatus according to an embodiment of the present disclosure.

### [Best Mode]

Hereinafter, with reference to the attached drawings, an embodiment of the present disclosure will be described in detail so as to be easily practiced by a person with ordinary skill in the art to which the present disclosure belongs.

However, the present disclosure may be implemented in various different forms and may not be limited to the embodiment described herein. In addition, to clearly illustrate the present disclosure in the drawings, parts that are not related to the description are omitted, and similar parts are given similar reference numerals throughout the present document.

In the present document, redundant descriptions of the same components are omitted.

Further, in the present document, it will be understood that when an element is referred to as being "connected with" another element, the element may be directly connected with the other element or intervening elements may also be present. In contrast, in the present document, it will be understood that when an element is referred to as being "directly connected with" another element, there are no intervening elements present.

Further, terms used herein are only used to describe a specific embodiment, and are not used as a limitation of the present disclosure.

Further, in the present document, a singular representation may include a plural representation unless it represents a definitely different meaning from the context.

Further, the terms such as "include" or "have" used herein are intended to indicate that features, numbers, steps, operations, elements, components, or combinations thereof used in the following description exist and it should be thus understood that the possibility of existence or addition of one or more different features, numbers, steps, operations, elements, components, or combinations thereof is not excluded.

Further, in the present document, the term 'and/or' includes a combination of a plurality of listed items or any of the plurality of listed items. Herein, 'A or B' may include 'A', 'B', or 'both A and B'.

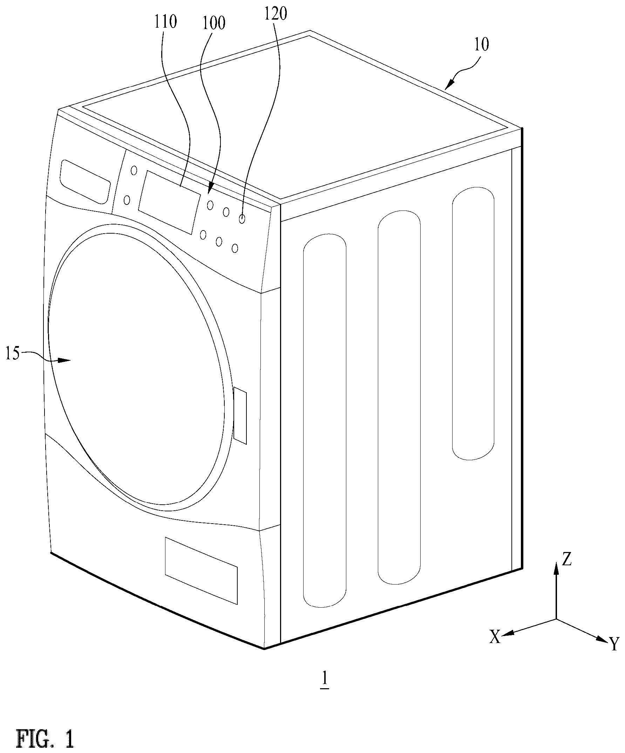

In FIG. 1, a laundry treating apparatus 1 according to an embodiment of the present disclosure is shown. The laundry treating apparatus 1 according to an embodiment of the present disclosure includes a cabinet 10. The cabinet 10 may have a space defined therein, and may form an outer appearance of the laundry treating apparatus 1.

The cabinet 10 may include a front panel, a rear panel, a side panel, and a top panel. The plurality of panels may be coupled to each other to form the cabinet 10. A laundry inlet 12 for allowing the outside and the inside of the cabinet 10 to be in communication with each other may be defined in one surface of the cabinet 10.

FIG. 1 illustrates a state in which the laundry inlet 12 is defined in the front panel according to an embodiment of the present disclosure, but the location of the laundry inlet 12 is not necessarily limited to the front panel.

A laundry door 15 may be coupled to the cabinet 10 to selectively shield the laundry inlet 12. For example, the laundry door 15 may be pivotably coupled to the front panel to shield the laundry inlet 12 based on a pivoting location.

An embodiment of the present disclosure may include a control panel 100. The control panel 100 may include an inputter 120 and an outputter. However, the inputter 120 and the outputter are not limited to being equipped only on the control panel 100.

A user may identify setting information of a course or progress information of the course from information output via the outputter, and may manipulate the inputter 120 to generate an input signal, thereby giving various commands to a controller 90, such as changing course setting. The control panel 100 and the controller 90 will be described in detail later.

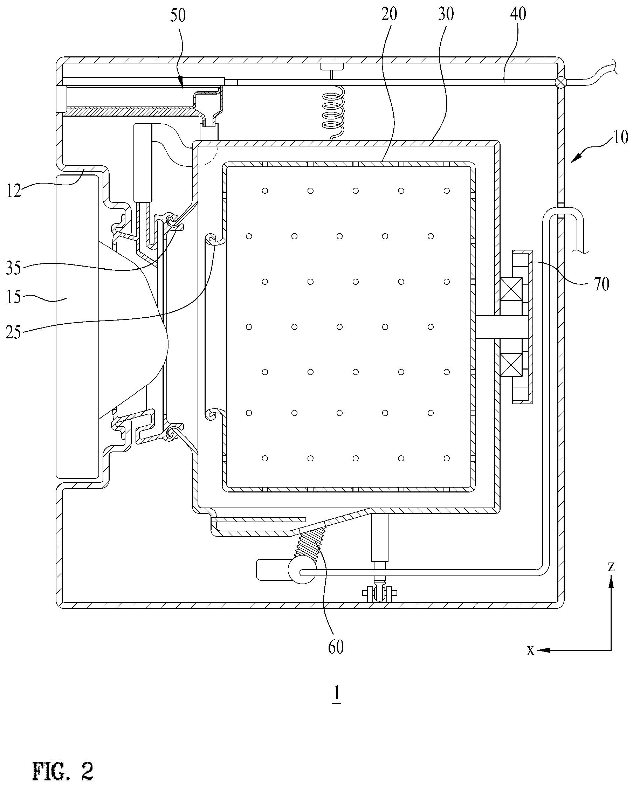

In one example, inside of the laundry treating apparatus 1 is illustrated in FIG. 2. A tub 30 and a drum 20 may be disposed inside the laundry treating apparatus 1 defined by the cabinet 10.

The tub 30 may be disposed inside the laundry treating apparatus 1 to accommodate water therein. The tub 30 may include a tub inlet 35 facing the laundry inlet 12. Accordingly, the laundry input via the laundry inlet 12 as the user opens the laundry door 15 may pass through the laundry inlet 12 and the tub inlet 35 and be accommodated in the tub 30.

The drum 20 may be rotatably disposed inside the tub 30. An embodiment of the present disclosure may further include a driver 70, and the drum 20 may be connected to the driver 70 to receive a rotational force.

The drum 20 may accommodate the laundry therein. The drum 20 may include a drum inlet 25 facing the tub inlet 35. Accordingly, the laundry input via the laundry inlet 12 by the user may be accommodated in the drum 20 via the tub inlet 35 and the drum inlet 25.

An embodiment of the present disclosure may include a water supply 40. The water supply 40 may be connected to an external water supply source and water may be supplied from the outside, and the water supply 40 may include a water supply hose that is a flow path of water, a water supply valve for regulating a flow of water, and the like.

An embodiment of the present disclosure may include a detergent supply 50. The detergent supply 50 may store detergent therein, and may supply the detergent into the tub 30 when the detergent is required in performing a course for treating the laundry.

FIG. 2 illustrates a structure in which the water supply 40 and the detergent supply 50 are connected to each other, and water flowing along the water supply 40 is supplied into the tub 30 together with the detergent via the detergent supply 50, but the present disclosure is not necessarily limited thereto. Further, the water supply 40 may be directly connected to the inside of the tub 30.

An embodiment of the present disclosure may include a drain 60. The drain 60 may be connected to the tub 30 to discharge water present in the tub 30 to the outside of the cabinet 10. The drain 60 may include a drain hose through which water flows, a drain pump that generates a flow force of water, and the like.

In an embodiment of the present disclosure, when a course for washing the laundry is performed, water and the detergent may be supplied into the tub 30 via the water supply 40 and the detergent supply 50, the washing of the laundry may be performed via rotation of the drum 20 by the driver 70, and water and the detergent of the tub 30 may be discharged to the outside of the cabinet 10 via the drain 60 as necessary.

However, the laundry treating apparatus 1 according to an embodiment of the present disclosure does not necessarily include the tub 30, and is able to be in a form in which the tub 30 is omitted as necessary. That is, an embodiment of the present disclosure may not be necessarily limited to a washing machine, and may be a dryer in the state in which the tub 30 is removed.

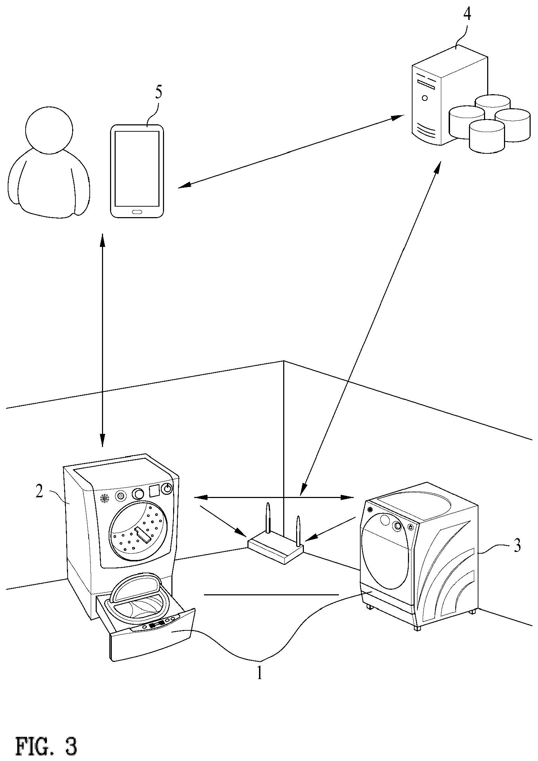

FIG. 3 conceptually illustrates an information exchange scheme of the laundry treating apparatus 1 according to an embodiment of the present disclosure.

In an embodiment of the present disclosure, the laundry treating apparatus 1 may be equipped to enable communication. A communication unit may enable various types of communication such as Bluetooth and WIFI. However, when necessary, the communication unit for the communication may be omitted.

In case of having the communication unit, the laundry treating apparatus 1 may be in direct communication with a terminal 5 of the user or communicate with a communication medium disposed outside the laundry treating apparatus 1, and in case of establishing communication with a communication medium, the laundry treating apparatus 1 may exchange information with a server 4 via the communication medium.

The terminal 5 of the user may be various devices having a communication function. For example, the terminal 5 may be various devices having the communication function, such as a mobile phone, a computer, a tablet PC, or the like.

The laundry treating apparatus 1 may exchange the information with the terminal 5 via the communication process with the terminal 5, or exchange the information with the server 4 via the communication process with the communication medium, when necessary. Furthermore, the terminal 5 may exchange the information with the server 4, and the laundry treating apparatus 1 may exchange the information with the server 4 via the communication medium, so that the information exchange may be indirectly performed with the terminal 5.

In one example, the laundry treating apparatus 1 according to an embodiment of the present disclosure may be composed of only the single drum 20, or may be composed of a first treating apparatus 2 including the drum 20 and a second treating apparatus 3 including a second drum 85 different from the drum 20 as shown in FIG. 3.

When the laundry treating apparatus 1 includes the first treating apparatus 2 and the second treating apparatus 3, the first treating apparatus 2 and the second treating apparatus 3 may be connected to each other in a wired manner to exchange information or may exchange the information in a wireless manner as shown in FIG. 3.

For example, the first treating apparatus 2 and the second treating apparatus 3 may be connected to each other in a direct wireless communication scheme such as a Bluetooth scheme to exchange the information, may be in communication with each other via a communication medium, or may be indirectly connected to each other via information exchange with the server 4 using the communication medium.

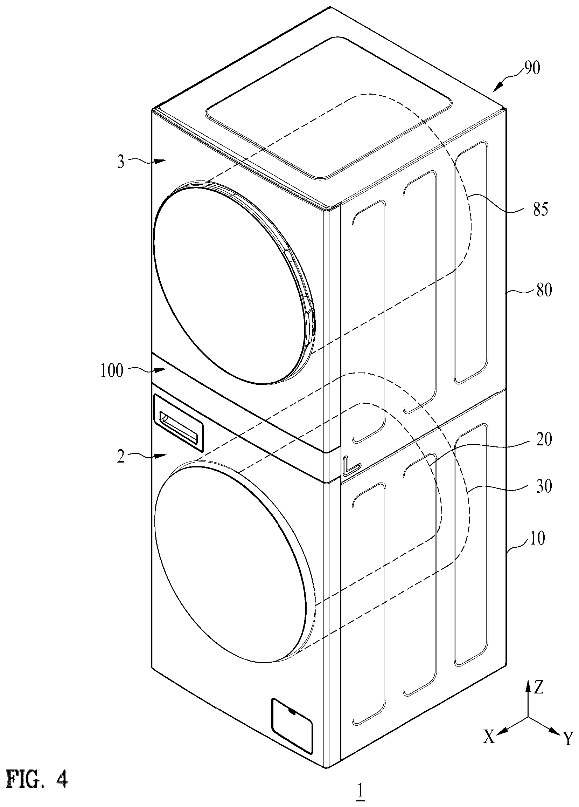

FIG. 4 shows the laundry treating apparatus 1 in which the first treating apparatus 2 and the second treating apparatus 3 are stacked. Referring to FIG. 4, an embodiment of the present disclosure may include the second treating apparatus 3 installed on the first treating apparatus 2.

The first treating apparatus 2 may include the cabinet 10 and the drum 20 described above. The second treating apparatus 3 may include a second cabinet 80, the second drum 85, and the like independently of the first treating apparatus 2.

The first treating apparatus 2 and the second treating apparatus 3 may perform courses for treating the laundry independently or in conjunction with each other. For example, the first treating apparatus 2 may correspond to the washing machine capable of washing the laundry and perform the course for washing the laundry, and the second treating apparatus 3 may correspond to a drying machine capable of drying the laundry and perform a course for drying the laundry.

For example, the first treating apparatus 2 may include the cabinet 10, the drum 20, and the tub 35 described above and may perform the course for washing the laundry, and the second treating apparatus 3 may include the second cabinet 80 disposed on the cabinet 10 and the second drum 85 rotatably disposed inside the second cabinet 80 and may perform the course for drying the laundry. However, both the first treating apparatus 2 and the second treating apparatus 3 may correspond to the washing machine or the dryer.

In one example, referring to FIG. 4, the laundry treating apparatus 1 may include the control panel 100 connected to the first treating apparatus 2 and the second treating apparatus 3. That is, when the laundry treating apparatus 1 includes the plurality of treating appratuses, the control panel 100 may also be connected to each of the plurality of treating apparatuses to output information on the plurality of treating apparatuses or receive commands from the plurality of treating apparatuses.

When the first treating apparatus 2 and the second treating apparatus 3 are stacked, the control panel 100 may be disposed on at least one of the first treating apparatus 2 and the second treating apparatus 3. FIG. 4 illustrates a state in which the control panel 100 is positioned at a lower portion of the second treating apparatus 3 to facilitate access of the user to secure ease of use.

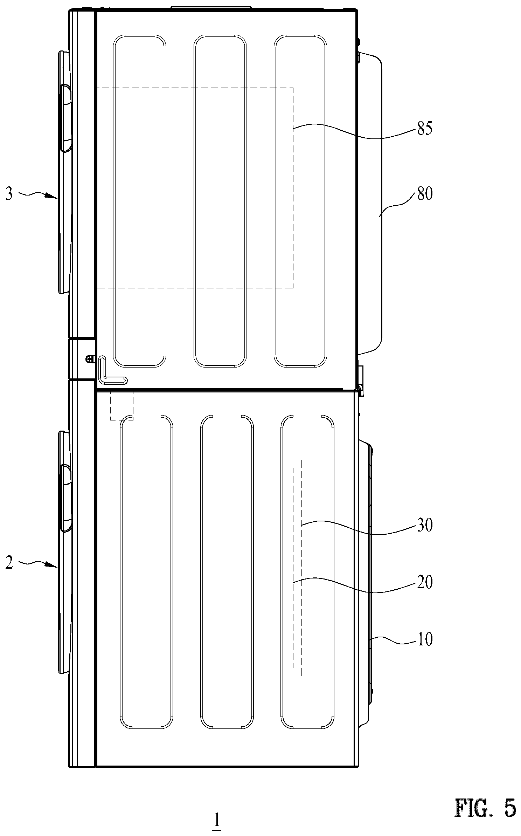

FIG. 5 illustrates a side view of the laundry treating apparatus 1 in which the first treating apparatus 2 and the second treating apparatus 3 are in the stacked form as shown in FIG. 4. In the laundry treating apparatus 1, the single drum 20 may be disposed inside the single cabinet 10, or the drum 20 and the second drum 85 described above may be disposed together therein.

In addition, as shown in FIG. 5, the second treating apparatus 3 may include the second cabinet 80 distinguished from the cabinet 10 of the first treating apparatus 2. In this case, the first treating apparatus 2 and the second treating apparatus 3 may be separately manufactured and assembled to each other in a use space of the laundry treating apparatus 1, or may be assembled to each other in advance in a production process.

However, the arrangement of the first treating apparatus 2 and the second treating apparatus 3 is not limited to stacking in a direction perpendicular to the ground. The first treating apparatus 2 and the second treating apparatus 3 may be arranged to be aligned with each other in a direction parallel to the ground or may be located to be spaced apart from each other.

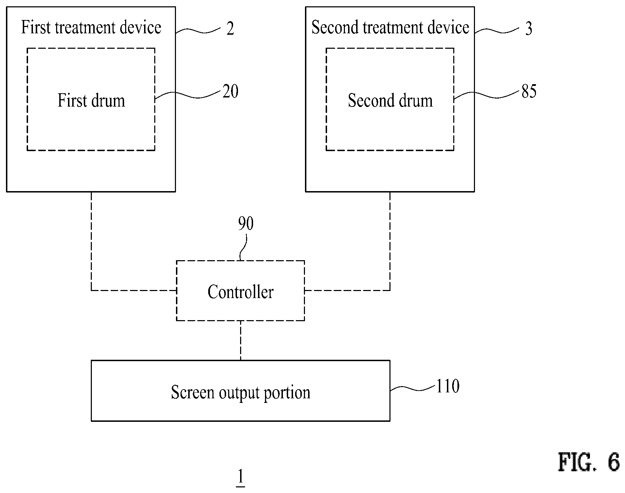

FIG. 6 is a conceptual diagram schematically showing a connection relationship of the controller 90 in an embodiment of the present disclosure. The laundry treating apparatus 1 may include the controller 90, and the controller 90 may include at least one of a processor, an communication unit, and storage.

The processor may perform a processing process via calculation or the like of information, the communication unit may enable communication in various communication schemes such as Bluetooth and WIFI, and the storage may store information.

When the laundry treating apparatus 1 includes the first treating apparatus 2 and the second treating apparatus 3, the controller 90 may be connected to each of the first treating apparatus 2 and the second treating apparatus 3. In addition, the controller 90 may be connected to a screen outputter 110 to control the screen outputter 110.

The controller 90 may be equipped in at least one of the first treating apparatus 2, the second treating apparatus 3, and the screen outputter 110. The controller 90 may include a plurality of controllers equipped in the first treating apparatus 2, the second treating apparatus 3, and the screen outputter 110, respectively.

For example, the first treating apparatus 2 may include a first sub-controller involved in operation of the first treating apparatus 2, the second treating apparatus 3 may include a second sub-controller involved in operation of the second treating apparatus 3, and the screen outputter 110 may include a screen controller involved in operation of the screen outputter 110.

The above-described controller 90 may be connected to the first sub-controller, the second sub-controller, and the screen controller to transmit a command of the user or receive information. In addition, one of the first sub-controller, the second sub-controller, and the screen controller may correspond to the above-described controller 90.

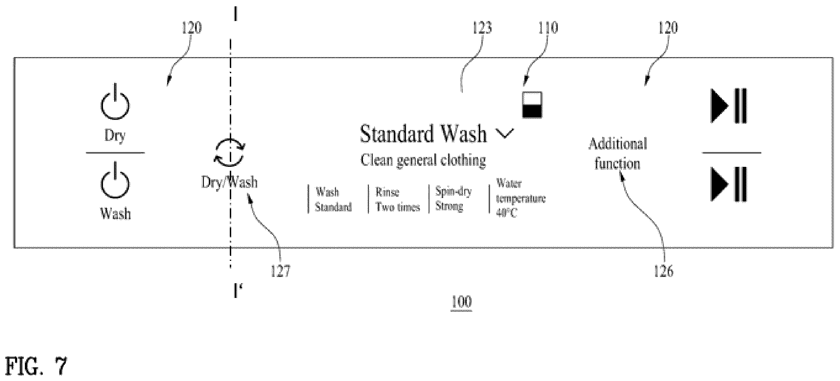

FIG. 7 shows the control panel 100 according to an embodiment of the present disclosure. The control panel 100 will be described in detail as follows.

The control panel 100 may include the inputter 120 and the outputter described above. The outputter may output various information such as auditory information and visual information so as to be provided to the user.

For example, the outputter may include a speaker for outputting a sound for providing the information or the screen outputter 110 for outputting the screen, and the screen outputter 110 may include a display for outputting the screen on which an image is expressed.

The inputter 120 may generate the input signal based on the manipulation of the user, and the input signal may be transmitted to the controller 90 and converted into various command signals. The inputter 120 may include a button assembly 125 having various buttons for generating the input signal by the manipulation of the user, and the buttons may be of various types such as a mechanical type or a touch type.

In an embodiment of the present disclosure, the inputter 120 may include a power button, and when the first treating apparatus 2 and the second treating apparatus 3 are disposed together, the power button may include a first power button for the first treating apparatus 2 and a second power button for the second treating apparatus 3.

In addition, when the laundry treating apparatus 1 includes the first treating apparatus 2 and the second treating apparatus 3, the inputter 120 may include a switch button 127. The switch button 127 may be used to switch an object on which the information is displayed via the screen outputter 110 from the first treating apparatus 2 to the second treating apparatus 3 and from the second treating apparatus 3 to the first treating apparatus 2.

In addition, the button assembly 125 may include an additional function button 126. The additional function button 126 may be used to output an additional function screen C270 in which additional functions for settings throughout use of the laundry treating apparatus 1 or additional settings for the course are displayed.

In addition, the button assembly 125 may include an execution button. When the execution button is manipulated in a course setting process P2, a currently set course may be performed. When the laundry treating apparatus 1 includes the first treating apparatus 2 and the second treating apparatus 3, the execution button may include a first execution button for starting a course of the first treating apparatus 2 and a second execution button for starting a course of the second treating apparatus 3.

In one example, the inputter 120 may include a touch inputter 123, and the touch inputter 123 may be equipped in the screen outputter 110. The touch inputter 123 may be formed in a shape of a panel for sensing a touch of the user and may be included in the display.

Accordingly, when the user touches an indicator such as an image or the like displayed on the screen outputter 110, a touch signal for a corresponding location may be transmitted to the controller 90 by the touch inputter 123, and the controller 90 may perform a control activity based on the touch signal.

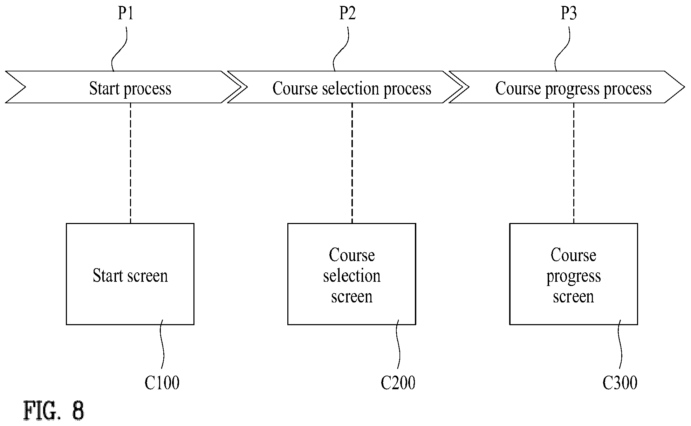

FIG. 8 conceptually illustrates an operation process of the laundry treating apparatus 1 according to an embodiment of the present disclosure and a screen of the screen outputter 110 according thereto.

First, when power is applied via the power button, the laundry treating apparatus 1 may perform a start process P1 in which the controller 90 determines normal states or the like of various components and prepares for performing the course, and the screen outputter 110 may output a start screen C100 for notifying the user of the start process P1.

After the start process P1 is completed, the controller 90 may perform the course setting process P2. A plurality of courses for treating the laundry may be stored in advance in the controller 90, and in the course setting process P2, the user may select one of the plurality of courses.

In addition, in the course setting process P2, various options for the course may be adjusted by the user. A detailed description of the option will be made later. The screen outputter 110 may output the course setting screen C200 for providing information on course setting in the course setting process P2.

When the above-described execution button is manipulated in the course setting process P2, the controller 90 may perform a course progress process P3 in which the course for treating the laundry is performed. In the course progress process P3, the controller 90 may perform the course determined via the course setting process P2, and the screen outputter 110 may output a course progress screen C300 indicating a progress of the corresponding course.

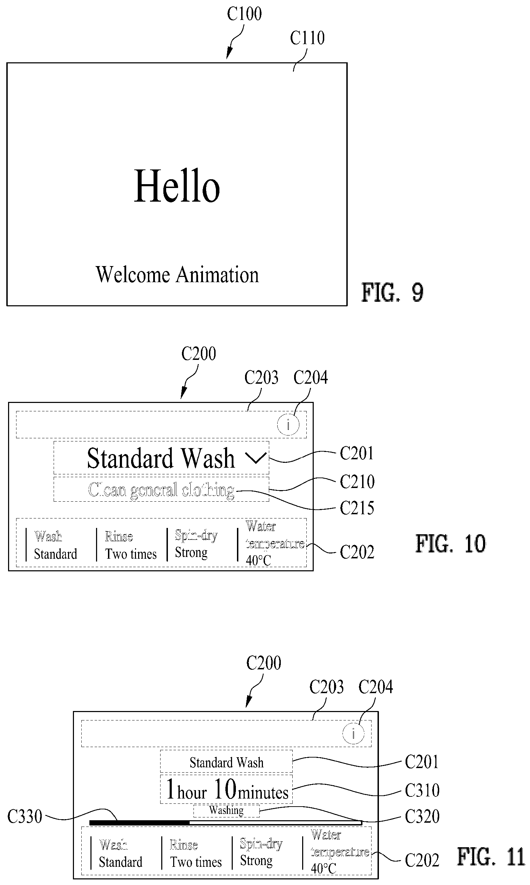

FIG. 9 illustrates the start screen C100 output from the screen outputter 110 according to an embodiment of the present disclosure. The start screen C100 may include an image notifying the user of the power application or may include several information for performing the course.

The screen shown in FIG. 9 corresponds to a welcome screen C110 indicating the power application of the laundry treating apparatus 1 in the start screen C100. The welcome screen C110 may be a screen that is output on the screen outputter 110 at the beginning of the power application to the laundry treating apparatus 1 or initially. The welcome screen C110 may include various phrases and images for forming an intimacy with the user or notifying the power application.

In FIG. 10, the course setting screen C200 is illustrated. In the course setting screen C200, a name of a course that is currently selected among the plurality of courses or the like may be displayed, and option setting information for the corresponding course may be displayed.

Specifically, the course setting screen C200 may include a course name area C201 in which the name of the course that is selected is displayed, and may include a suggestion area C210 in which a course description phrase C215 for describing the course displayed in the course name area C201 or content related to a suggestion content C212 to be described later is displayed.

In addition, the course setting screen C200 may include an indicator area C203. Various indicators C204 indicating information on a currently set option, state information, or the like may be displayed in the indicator area C203.

In addition, the course setting screen C200 may include an option information area C202 indicating current option information for the course displayed in the course name area C201. Setting values for one or more options may be displayed in the option information area C202.

However, the course setting screen C200 according to an embodiment of the present disclosure does not necessarily include all of the course name area C201, the suggestion area C210, the indicator area C203, and the option information area C202. Further, arrangement of the respective areas may also vary as needed.

In FIG. 11, the course progress screen C300 is illustrated. In the course progress screen C300, the course name area C201 in which the course in progress is displayed, a time guide area C310 indicating a remaining time until completion of the course, a state display area C320 indicating a current state of the course, a progress bar C330 indicating a current process among entire processes of the course in an image form, and the indicator area C203 and the option information area C202 described above may be defined.

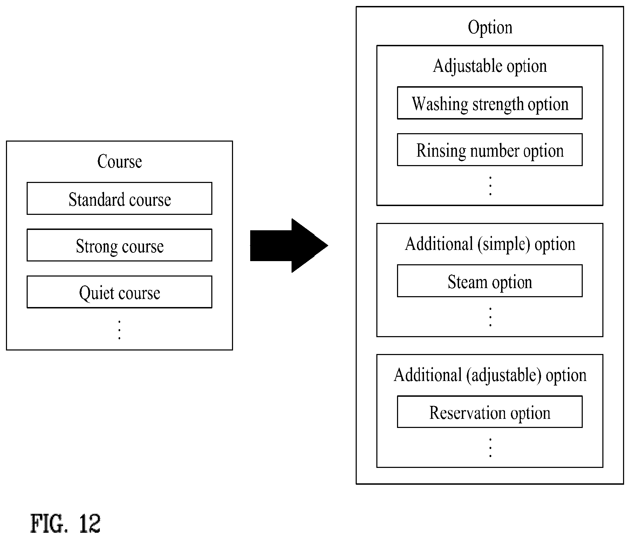

FIG. 12 is a conceptual diagram showing a concept of a plurality of courses and various options in an embodiment of the present disclosure.

In an embodiment of the present disclosure, the course corresponds to a process stored in advance in the controller 90 to include at least one or more strokes for treating the laundry. The course may include the at least one strokes.

For example, a standard course for washing the laundry may be preset in the controller 90, including at least one of a water supply stroke, a washing stroke, a rinsing stroke, a drainage stroke, and a dehydration stroke.

A plurality of different courses may be stored in advance in the controller 90. FIG. 12 illustrates the standard course, a strong course, a quiet course, and the like, but the plurality of courses are not necessarily limited thereto.

In one example, the controller 90 may be equipped to adjust various options for a course. In an embodiment of the present disclosure, the options may be categorized into adjustable options, simple additional options, and adjustable additional options.

Whether to apply the adjustable option may not be determined by the user, and may be maintained in a state of being predetermined by the controller 90. In other words, the adjustable option for each course may be determined by the controller 90 in advance, and the user may change a setting value of the adjustable option activated in the corresponding course.

For example, the plurality of courses may include a rinsing course including a water supply stroke, a rinsing stroke, and a drainage stroke. The controller 90 may activate a rinsing number option, a water amount option, or the like as the adjustable option for the rinsing course, and a washing strength option or the like may be deactivated in advance.

Accordingly, when the rinsing course is displayed in the course setting screen C200, the user is able to only change a setting value of the rinsing number option or the like activated as the adjustable option, and is not able to change the state of the washing strength option or the like to the active state. Such adjustable option may be determined based on strokes included in the corresponding course.

In one example, the option adjustable by the user in an embodiment of the present disclosure may include a plurality of option values C260. For example, the above-described rinsing number option may include option values C260 such as one time, two times, and three times, and one option value C260 selected by the user may be reflected in the controller 90 as a setting value of the corresponding option.

That is, when the user selects the option value C260 of 'two times' among the option values C260 of the rinsing number option in the rinsing course, the option value C260 of 'two times' may become a setting value of the rinsing number option and may be reflected in the corresponding course.

In one example, an embodiment of the present disclosure may include the simple additional option. The simple additional option refers to an option that may only be determined by the user on whether it is to be applied to the corresponding course, and may not enable separate setting value adjustment.

For example, in the standard course for washing the laundry, a steam option of spraying steam is basically set to be in a non-applied state. However, the user may change the state of the steam option to an applied state as necessary and reflect the steam option in the corresponding course.

The simple additional option that may be changed by the user on whether it is to be applied to each of the plurality of courses may be preset in the controller 90. For example, in the above-described standard course, the steam option corresponds to the simple additional option that may be changed by the user on whether it is to be applied.

However, in case of a steam course in which the steam option is essentially set to be in the applied state, the steam option may be preset in the controller 90 so as not to be changed by the user on whether it is to be applied, and thus, the steam option for the steam course does not correspond to the simple additional option.

In one example, an embodiment of the present disclosure includes the adjustable additional option. The adjustable additional option refers to an option that may be determined by the user on whether it is to be applied to the corresponding course, and furthermore, and may have to select one of the plurality of option values C260 for the corresponding option as a setting value when the option is applied.

For example, an embodiment of the present disclosure may include a reservation option as the adjustable additional option. The user may select whether to apply the reservation option to the standard course for the washing, and when the reservation option is applied, determine one of the plurality of option values C260 for the reservation option, for example, the plurality of option values C260 such as after 30 minutes, after 1 hour, and after 1 hour and 30 minutes, as the setting value.

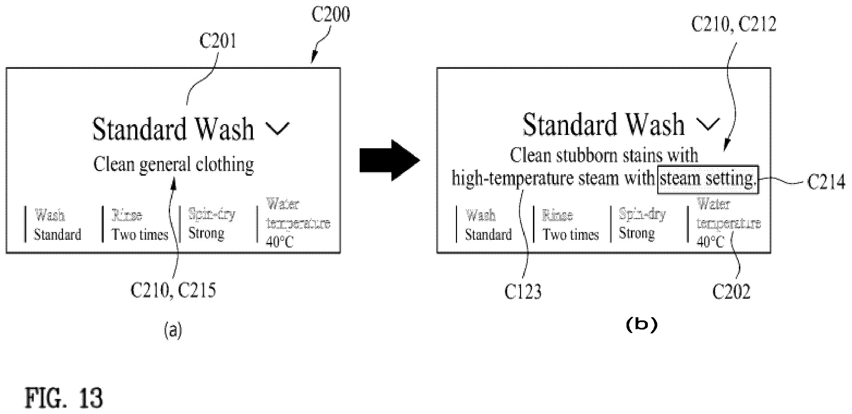

FIG. 13 illustrates a state in which the suggestion content C212 is displayed in the suggestion area C210 of the course setting screen C200 according to an embodiment of the present disclosure. An embodiment of the present disclosure may suggest setting of various options to the user via the suggestion area C210 of the course setting screen C200.

Specifically, in (a) in FIG. 13, a description of the course displayed in the course name area C201 is displayed in the suggestion area C210, and in (b) in FIG. 13, the suggestion content C212 suggesting application of an option not currently applied to the course is displayed in the suggestion area C210.

The suggestion content C212, which is for suggesting a course setting for treating the laundry to the user, may be displayed to guide a more advantageous course setting to the user based on various conditions and environments.

An embodiment of the present disclosure may suggest the more effective and convenient setting in treating the laundry to the user via the suggestion area C210, and the user may perform the course setting based on the suggestion via the suggestion area C210 even in a state in which various courses and various options are not completely reviewed, thereby greatly improving convenience of use.

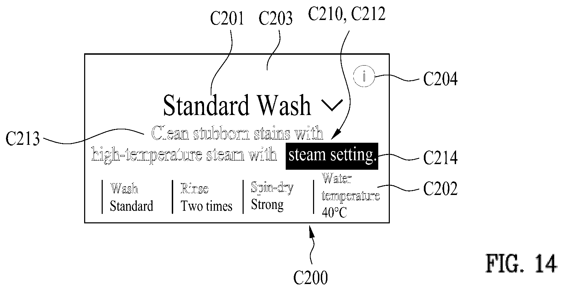

FIG. 14 illustrates the course setting screen C200 including the suggestion area C210 in which a change or additional application of the option is suggested according to an embodiment of the present disclosure. The course setting screen C200 will be described in detail as follows.

First, an embodiment of the present disclosure includes the cabinet 10, the drum 20, and the screen outputter 110 as described above, the drum 20 is rotatably disposed inside the cabinet 10 and accommodates the laundry therein, and the screen outputter 110 is disposed on the cabinet 10 and outputs a screen thereon.

The screen outputter 110 may output the course setting screen C200 including the suggestion area C210 in which the option that may be changed or additionally applied in the course for treating the laundry is presented. That is, the option to be suggested may be displayed in the suggestion area C210.

When the suggestion area C210 is selected, a setting value of the option may be changed or the option may be additionally applied and displayed on the course setting screen C200. The option suggested in the suggestion area C210 may correspond to an adjustable option for the course displayed in the course name area C201 of the course setting screen C200, such as a water temperature option.

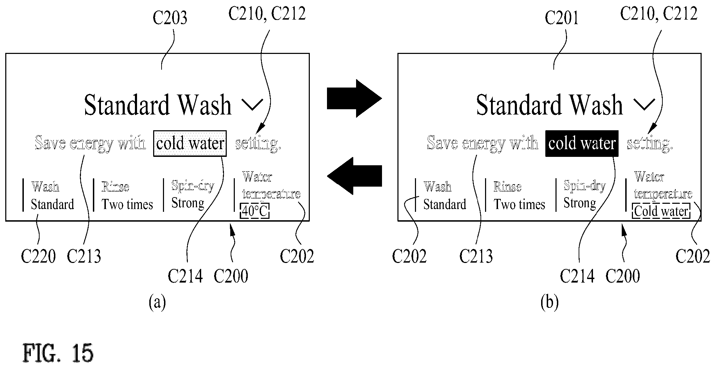

In addition, the option suggested in the suggestion area C210 may correspond to a simple additional option not currently applied to the course, such as a steam option, in addition to the adjustable option. FIG. 15 shows that the suggestion area C210 including a phrase "steam setting" indicating the steam option and suggesting application of the steam option is displayed.

In an embodiment of the present disclosure, the suggestion area C210 may display a course description phrase C215 describing the course displayed in the course name area C201, and when a specific condition is satisfied, may display a suggestion content C212 for changing a setting value of the adjustable option or suggesting application of the simple additional option to the user.

As the change or the addition of the option is suggested in the suggestion area C210, it may be suggested that the user reflects the change or the addition of the option overlooked by the user, thereby improving a convenience of use and a performance efficiency of the course.

In addition, in an embodiment of the present disclosure, the suggestion content C212 may be displayed instead of the course description phrase C215 via the suggestion area C210 in which the course description phrase C215 is displayed, so that a recognition rate of the user for the suggestion content C212 may be improved and a limited screen output area may be effectively used.

FIG. 15 illustrates a state in which the setting value of the adjustable option displayed in the option setting area is changed by selection of the suggestion area C210 according to an embodiment of the present disclosure.

In an embodiment of the present disclosure, the course setting screen C200 may include the above-described option setting area, and at least one adjustable option may be displayed in the option setting area.

In the option setting area, a phrase indicating a name of the adjustable option and a setting value for each option may be displayed. In the option setting area in FIG. 15, a washing strength option, a rinsing option, a dehydration option, and a water temperature option are displayed. However, the adjustable options displayed in the option setting area may not be necessarily limited thereto, and may be changed for each course.

An embodiment of the present disclosure may display the adjustable option of the course displayed on the course setting screen C200 to the user via the option setting area, and further, may effectively notify the user of a current setting value of each adjustable option.

In addition, as will be described later, the adjustable options displayed in the option setting area may be displayed to be independently selectable, and the user may directly change the setting value by selecting each option via the manipulation of the inputter 120.

(a) in FIG. 15 illustrates a case before selection of the suggestion area C210 or in which a setting value of the option suggested in the suggestion area C210 and a current setting value are different from each other, and (b) in FIG. 15 illustrates a case after the selection of the suggestion area C210 or in which the setting value of the option suggested in the suggestion area C210 and the current setting value are equal to each other.

As described above, in an embodiment of the present disclosure, the suggestion area C210 may be displayed to be selectable by the user, and when the user selects the suggestion area C210, the suggestion area C210 may be selected as shown in (b) in FIG. 15 and it may be displayed that the suggestion based on the suggestion content C212 is reflected in the current course.

That is, when the suggestion area C210 is selected, the screen outputter 110 may display a suggestion reflected state for the option in the suggestion area C210.

There may be various schemes of indicating that the option change suggestion by the suggestion area C210 is reflected on the course setting screen C200. FIG. 15 illustrates the suggestion area C210 in which a change in a setting value of the adjustable option called the water temperature option is suggested according to an embodiment of the present disclosure.

When the suggestion of the adjustable option is applied, the setting value of the corresponding option in the option setting area may be changed to the setting value suggested in the suggestion area C210 and the changed value may be displayed. (b) in FIG. 15 illustrates a state in which the setting value of the water temperature option of the option setting area is marked as 'cold water' by the selection of the suggestion area C210 suggesting to change the setting value of the water temperature option to a 'cold water' setting value.

In addition, display of the suggestion indicator C214 included in the suggestion area C210 may be changed, or the application of the suggestion area C210 may be displayed in a manner in which the indicator C204 is additionally displayed. The indication of the reflected state of the suggestion content C212 by the suggestion indicator C214 and the indicator C204 of the indicator area C203 will be described later.

An embodiment of the present disclosure may conveniently suggest the change in the setting value of the option to the user via the suggestion area C210, and the setting value of the corresponding option may be simply and conveniently changed via the selection of the suggestion area C210.

When the option is displayed in the option setting area, the setting value for the option may be immediately changed in the option setting area along with the selection of the suggestion area C210, so that the selection and reflection of the suggestion area C210 may be effectively displayed and easily identified by the user.

In one example, when the suggestion area C210 is selected again while the suggestion reflected state is displayed, the screen outputter 110 may display a suggestion non-reflected state for the option.

That is, in an embodiment of the present disclosure, even after the suggestion for changing the option based on the suggestion area C210 is reflected, the suggestion content C212 may still be displayed in the suggestion area C210, and when the suggestion area C210 is selected after the suggestion is reflected, the change of the option may be conveniently canceled.

For example, when the suggestion area C210 is selected on the course setting screen C200 reflecting the change in the setting value of the option suggested in the suggestion area C210 as shown in (b) in FIG. 15, the course setting screen C200 returning to the state before the setting value of the option suggested in the suggestion area C210 is reflected as shown in (a) in FIG. 15 may be output.

Specifically, in FIG. 15, the suggestion area C210 suggesting to change the setting value of the water temperature option to the 'cold water' is displayed. When the suggestion area C210 is selected again by the user while the setting value of the water temperature option displayed in the option setting area is the 'cold water' as suggested in the suggestion area C210 as in (b) in FIG. 15, the course setting screen C200 on which a setting value '40 degrees' before the change in the setting value by the suggestion area C210 for the water temperature option may be output as shown in (a) in FIG. 15.

As described above, in an embodiment of the present disclosure, the suggestion area C210 may not only suggest the efficient and convenient option change to the user and provide the easy change process, but also simply cancel the change of the option via the re-selection of the suggestion area C210, thereby effectively improving the convenience of use.

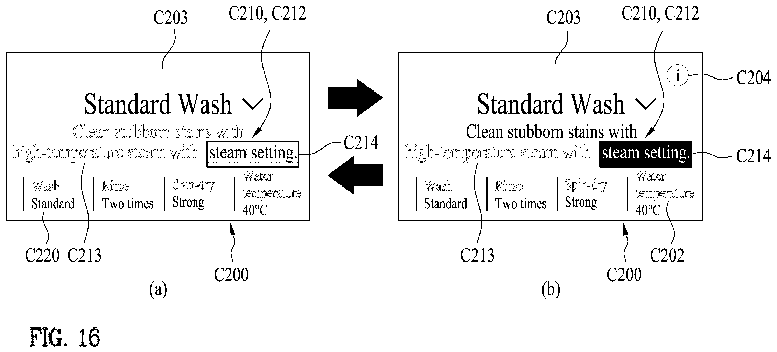

FIG. 16 illustrates a process in which a simple additional option is suggested via the suggestion area C210 and is set in a course. (a) in FIG. 16 shows the course setting screen C200 on which the suggestion area C210 where the simple additional option is suggested is displayed, and (b) in FIG. 16 illustrates the course setting screen C200 to which the corresponding option is applied via selection of the suggestion area C210.

In an embodiment of the present disclosure, the suggestion area C210 may display not only the adjustable option displayed in the option setting area, but also the suggestion content C212 suggesting the additional application of the simple additional option not displayed in the option setting area.

As described above, the simple additional option may mean an option that may be selected by the user on whether it is to be applied to the course displayed in the course name area C201 of the course setting screen C200, and may not enable separate selection of a setting value thereof.

In an embodiment of the present disclosure, a plurality of suggestion content C212 may be stored in advance in the controller 90. The plurality of suggestion content C212 may include different suggestions. For example, the plurality of suggestion content C212 may suggest setting of different options or suggest different setting schemes even for the same option.

For example, the suggestion content C212 suggesting the setting of the adjustable option called the water temperature option is shown in FIG. 15, and the suggestion content C212 suggesting the setting of the simple additional option called the steam option, unlike the water temperature option, is shown in FIG. 16.

The controller 90 may control the screen outputter 110 to display suggestion content C212 corresponding to setting advantageous to the current user among the plurality of suggestion content C212 in the suggestion area C210. In the suggestion area C210, suggestion content C212 for which a suggestion condition is satisfied among the plurality of suggestion content C212 may be displayed. A detailed description of the suggestion condition will be made later.

In one example, referring to (a) in FIG. 16, in an embodiment of the present disclosure, the suggestion content C212 for suggesting the simple additional option may be displayed in the suggestion area C210. In this case, a phrase indicating a name of the option and a phrase indicating a reason for suggesting the option may be displayed in the suggestion area C210.

The user may be suggested to additionally apply the option suggested via the suggestion area C210 of the course setting screen C200 in the process of setting the course for treating the laundry, and the user may select the suggestion area C210 via the inputter 120.

In one example, referring to (b) in FIG. 16, when the user selects the suggestion area C210 and the corresponding option is additionally applied, an indicator C204 indicating the applied state of the simple additional option additionally applied by the suggestion area C210 may be displayed on the course setting screen C200.

That is, in an embodiment of the present disclosure, the course setting screen C200 may further include an indicator area C203 in which the indicator C204 corresponding to the option is displayed when the option is additionally applied, and the indicator C204 may be displayed in the indicator area C203.

There may be various display schemes of the indicator C204. For example, the indicator C204 indicating the corresponding option may be always displayed in the indicator area C203, but a color or brightness of the corresponding indicator C204 may be changed based on whether the corresponding option is applied or not, or the indicator C204 may be output only when the corresponding option is applied.

There may also be various shapes of the indicator C204. The indicator C204 may have the various shapes having characteristics of indicating the corresponding option. For example,

FIG. 16 shows a state in which the 'steam option', which is one of the simple additional options, is suggested via the suggestion area C210, and the indicator C204 for indicating the steam option may be in a shape conceptually representing a shape of steam or a shape representing characters of steam.

As described above, in an embodiment of the present disclosure, the option suggested via the suggestion area C210 may be the adjustable option displayed in the option setting area, and in addition, may be the simple additional option not displayed in the option setting area. Even in the case of the simple additional option, the user may easily identify whether the option is additionally applied via the indicator C204 displayed in the indicator area C203.

In one example, in an embodiment of the present disclosure, even after the user selects the suggestion area C210 and the setting value of the option is changed or the option is additionally applied, the suggestion content C212 displayed in the suggestion area C210 may be maintained without disappearing.

For example, (b) in FIG. 16 illustrates the course setting screen C200 on which the suggestion content C212 suggesting the steam option is still displayed in the suggestion area C210 even in the state in which the simple additional option called the steam option is applied.

The user may be conveniently suggested to change or additionally apply the option via the suggestion area C210, may simply and conveniently perform the change or the additional application of the option via the selection of the suggestion area C210, and may simply restore the state before the change or the additional application of the option by selecting the suggestion area C210 again after the change or the additional application of the option.

In other words, the controller 90 may control the screen outputter 110 to display content for suggesting the change in the setting value of the adjustable option or the additional application of the simple additional option in the suggestion area C210.

In addition, when it is determined that the suggestion area C210 is selected based on the input signal of the inputter 120 that generates the input signal based on the manipulation of the user, such as the touch inputter 123, the controller 90 may change the setting value of the option or additionally apply the option based on the content predetermined based on the suggestion content C212.

In one example, after changing or applying the option based on the selection of the suggestion area C210, the controller 90 may control the screen outputter 110 such that the changed setting value of the option or the additionally applied state of the option is displayed on the course setting screen C200.

In an embodiment of the present disclosure, the option may be changed or additionally applied while the course setting screen C200 is maintained without a screen switching process for setting the option via the change or additional application scheme of the option using the suggestion area C210, thereby improving the convenience of use.

In one example, the suggestion indicator C214 indicating the option may be displayed in the suggestion area C210. The suggestion indicator C214 may be displayed in the suggestion area C210 and understood as an entity corresponding to the option.

The suggestion indicator C214 may be displayed to indicate the option. For example, as illustrated in FIGS. 15 and 16, the suggestion indicator C214 may be displayed to include a part of the name of the option or include a part of a name of a suggested option value C260.

For example, in FIG. 15, the suggestion indicator C214 including a word 'cold water' suggested as the setting value among option values C260 of the water temperature option is displayed to indicate that the option for which the setting value change is suggested corresponds to the 'water temperature option'.

The user may not only identify that the change of the water temperature option for adjusting a water temperature is suggested via the word 'cold water' of the suggestion indicator C214, but also easily identify that the content suggested by the suggestion content C212 is to change the setting value of the water temperature option to the cold water.

In addition, the suggestion indicator C214 including the word 'steam setting' is displayed in FIG. 16. That is, the user may easily identify that the application of the steam option is suggested via the word 'steam' of the suggestion indicator C214.

In one example, the user may not only identify which option is suggested in the suggestion area C210 and what the suggestion content for the corresponding option is via the suggestion indicator C214, but also identify whether the suggestion content of the suggestion area C210 is reflected via the suggestion indicator C214.

In an embodiment of the present disclosure, the suggestion indicator C214 may be displayed as different images before and after the selection of the suggestion area C210. In FIGS. 15 and 16, the change in the suggestion indicator C214 before and after the selection of the suggestion area C210 is displayed.

The suggestion indicator C214 may have the different image depending on whether the suggestion content C212 is reflected. For example, the suggestion indicator C214 may have different shapes or different colors in a state in which the suggestion area C210 is selected and the suggestion area C210 is activated and a state in which the suggestion area C210 is deactivated before the selection.

In addition, the suggestion indicator C214 may allow the user to distinguish between the inactive state before the suggestion area C210 is selected and the active state in which the suggestion area C210 is selected with the naked eye via a change in brightness or chroma or a change in the characters included in the suggestion indicator C214.

In one example, in an embodiment of the present disclosure, the suggestion indicator C214 may have the different colors in the active state and the inactive state of the suggestion area C210. In this regard, the different colors include not only changes in chroma, but also differences in brightness.

In FIGS. 15 and 16, the suggestion indicator C214 displayed to have different brightness before and after the selection of the suggestion area C210 is illustrated. The user may identify the color of the suggestion indicator C214 to easily identify whether the option is changed or added by the current suggestion area C210.

In one example, in an embodiment of the present disclosure, when the suggestion area C210 is selected, the suggestion indicator C214 may be displayed as a flickering motion having different colors alternately. The flickering motion of the suggestion indicator C214 may be performed immediately after the activation of the suggestion area C210 as well as immediately after the deactivation.

In an embodiment of the present disclosure, the flickering motion of the suggestion indicator C214 may be understood as a state in which a first color of the suggestion indicator C214 based on the inactive state of the suggestion area C210 and a second color of the suggestion indicator C214 based on the active state are alternately indicated for a time set in advance in the controller 90.

That is, while the course setting screen C200 is output on the display of the screen outputter 110, when the user manipulates the touch inputter 123 or the button assembly 125 disposed to overlap the display and selects the suggestion area C210 in the inactive state, the first color and the second color may be indicated alternately for the predetermined time of the suggestion indicator C214.

In addition, an embodiment of the present disclosure may cancel the change or the addition of the option based on the suggestion content C212 by selecting the activated suggestion area C210 again, and accordingly, may display the flickering motion of the suggestion indicator C214 for the predetermined time even when the user selects the suggestion area C210 in the active state.

Accordingly, the user may not only easily identify that the change or the addition of the option suggested in the suggestion area C210 has been made via the color change of the suggestion indicator C214, but also conveniently identify whether the selection process for the suggestion area C210 has been normally performed via the flickering motion of the suggestion indicator C204.

In one example, the suggestion area C210 may include not only the suggestion indicator C214 but also a suggestion phrase C213. That is, in an embodiment of the present disclosure, the suggestion indicator C214 indicating the option and the suggestion phrase C213 for suggesting the option may be displayed in the suggestion area C210.

That is, in an embodiment of the present disclosure, the suggestion content C212 may be displayed in the suggestion area C210, and the suggestion content C212 may include the suggestion indicator C214 and the suggestion phrase C213. As described above, in an embodiment of the present disclosure, there may be a plurality of suggestion content C212, and the plurality of suggestion content C212 may include different suggestion indicators C214 or suggestion phrases C213, respectively.

The suggestion indicator C214 displayed in the suggestion area C210 may include a word or the like meaning the option to be suggested or the setting value thereof as described above. The suggestion phrase C213 may correspond to a description of the corresponding suggestion, and the user may identify a reason, an effect, or the like of the suggestion of the suggestion content C212 currently displayed in the suggestion area C210 via the suggestion phrase C213.

In the suggestion area C210 in FIG. 15, an advantage in setting the option value C260 of the 'cold water' as the setting value with respect to the water temperature option is indicated via the suggestion phrase C213.

In the suggestion content C212 in FIG. 15, a suggestion phrase C213 describing an advantage in terms of energy of the use of cold water by changing the setting value of the water temperature option to the 'cold water' is displayed, and in the suggestion area C210 in FIG. 16, a suggestion phrase C213 describing an advantage of improving a washing quality by applying the steam option is displayed.

In one example, in an embodiment of the present disclosure, the suggestion indicator C214 may be defined to include at least a part of the suggestion phrase C213. As described above, the suggestion indicator C214 may be defined to include the word or the like, and the word included in the suggestion indicator C214 may correspond to the part of the suggestion phrase C213.

That is, in an embodiment of the present disclosure, the suggestion phrase C213 may be displayed as a sentence including the word of the suggestion indicator C214, and accordingly, inconvenience caused by the user reading the suggestion indicator C214 and the suggestion phrase C213 in a manner distinguished from each other may be solved, and readability or comprehensibility of the user may be effectively increased.

In one example, the suggestion indicator C214 may include a border for distinguishing at least the part and the rest of the suggestion phrase C213 from each other. That is, the border allowing words belonging to the suggestion indicator C214 to be distinguished from the suggestion phrase C213 other than the words may be displayed in the suggestion area C210.

Although a rectangular border is shown in FIGS. 15 and 16, there may be various specific shapes of the border in addition to the rectangular shape. Inside of the border may have the first color and the second color of the suggestion indicator C214 described above.

An embodiment of the present disclosure may allow the user to easily understand the suggestion content without feeling repulsive via the suggestion phrase C213 and the suggestion indicator C214 displayed in one sentence, and furthermore, may allow the setting content based on the suggestion content C212 to be clearly identified and allow whether the suggestion area C210 is activated to be clearly identified by displaying the border for defining the suggestion indicator C214.

In one example, as described above, the screen outputter 110 may be constructed to sense the touch signal of the user with respect to the screen. Accordingly, the touch signal of the user with respect to the screen outputter 110 may be transmitted to the controller 90 with location information thereof included.

The touch signal may be generated by the above-described touch inputter 123. The touch inputter 123 that may receive the touch signal of the user, such as a touch panel, may be equipped on the display of the screen outputter.

When the touch signal is generated in at least a portion of the suggestion area C210, the setting value of the option may be changed or the option may be additionally applied and displayed. When the touch signal with respect to the suggestion area C210 is transmitted from the course setting screen C200, the controller 90 may activate or deactivate the suggestion area C210.

However, for the controller 90, a range determined as the selection of the suggestion area C210 may correspond to an entirety of the suggestion area C210 or may be limited to the suggestion indicator C214 described above. That is, the controller 90 may determine that the user has selected the suggestion area C210 when the touch signal for the inside of the border of the suggestion indicator C214 is input.

In an embodiment of the present disclosure, the setting of the option based on the suggestion content C212 may be automatically performed when the user simply touches at least a portion of the suggestion area C210 on the course setting screen C200 output by the screen outputter 110, thereby improving convenience.

In one example, in an embodiment of the present disclosure, the suggestion area C210 may be selected via the inputter 120 other than the screen outputter 110.

As described above, the inputter 120 may be disposed on the cabinet 10, and the input signal of the user for selecting the suggestion area C210 may be generated. In an embodiment of the present disclosure, the suggestion area C210 may be selected via a component other than the touch inputter 123 of the inputter 120.

For example, as described above, the inputter 120 may include the button assembly 125, and the button assembly 125 may be disposed on the cabinet 10 and manipulated by the user to generate the input signal.

The button assembly 125 may include a component for selecting an entity to be displayed on the screen of the screen outputter 110, such as a movement button or a dial, and the user may select the suggestion area C210 by manipulating the button assembly 125 or the like to generate the input signal.

In one example, in an embodiment of the present disclosure, the suggestion content C212 may have a plurality of different suggestion conditions to be displayed in the suggestion area C210 as described above. The controller 90 may control the screen outputter 110 to output, in the suggestion area C210, the suggestion content C212 satisfying the suggestion condition among the plurality of suggestion content C212.

The controller 90 may determine whether the suggestion condition for each of the plurality of suggestion content C212 is satisfied, and the suggestion condition may be various. For example, the suggestion condition may correspond to various conditions, such as a condition for a time, a condition based on a temperature, and a condition based on an amount of laundry.

The suggestion condition may be determined based on the content of the suggestion content C212. That is, the setting content of the option suggested in the suggestion content C212 may advantageously work in the corresponding suggestion condition, and such suggestion condition may be preset in the controller 90 and the suggestion content C212 satisfying the suggestion condition may be suggested to the user.

For example, the suggestion content C212 for changing the water temperature option is shown in FIG. 15, and the suggestion content C212 for applying the steam option is shown in FIG. 16. In an embodiment of the present disclosure, the suggestion content C212 may not be necessarily limited as described above, and may be various as necessary.

In one example, when there are a plurality of suggestion content C212 satisfying respective suggestion conditions thereof among the plurality of suggestion content C212, one based on priority may be displayed in the suggestion area C210.

That is, one suggestion content C212 may be displayed in the suggestion area C210. That is, one suggestion indicator C214 and the suggestion phrase C213 may be displayed in the suggestion area C210. However, when necessary, the plurality of suggestion content C212 may be displayed together in the suggestion area C210.

In an embodiment of the present disclosure, when one suggestion content C212 is displayed in the suggestion area C210, one having a high priority among the plurality of suggestion content C212 satisfying the suggestion conditions may be displayed in the suggestion area C210.

The priority may be preset in the controller 90, and the controller 90 may control the screen outputter 110 such that one having the highest priority among the plurality of suggestion content C212 satisfying the suggestion conditions is output in the suggestion area C210.

The priority may be determined based on various criteria. For example, the priority may be determined based on the adjustable option, the simple additional option, and the adjustable additional option, a priority of a suggestion content C212 related to safety may be set to be high, or a priority related to energy efficiency may be set to be high.

In one example, in an embodiment of the present disclosure, when a current time corresponds to a specific time range having a one year cycle, the suggestion condition of at least one of the plurality of suggestion content C212 may be satisfied.

That is, the suggestion content C212 may be displayed in the suggestion area C210 as the suggestion condition is satisfied only in a specific period of one year. An embodiment of the present disclosure may display the suggestion content C212 via the period condition having the one year cycle, thereby providing convenient option setting to the user.

For example, the setting of the period having the one year cycle may be advantageous in providing seasonal option setting in a country where four seasons exist. Characteristics such as temperature may be easily distinguished from each other in the four seasons, and option setting based on such seasonal characteristics may be suggested to the user.

Furthermore, the setting of the period having the one year cycle may be advantageous in providing the user with the suggestion content C212 having option setting in consideration of a specific climate in a period in which the specific climate occurs during one year.

For example, although there may be some differences between countries, when a period in which a precipitation is particularly increased is specified based on one year, the suggestion content C212 for suggesting setting of an option suitable for a high precipitation, that is, a rainy weather, may be provided to the user under a suggestion condition of the corresponding period.

In one example, in an embodiment of the present disclosure, at least one suggestion content C212 may be preset in the controller 90 such that the suggestion condition is satisfied when it corresponds to a period including at least a partial period of July of one year.

In addition, the suggestion content C212 having the suggestion condition may correspond to the steam option. That is, when the suggestion condition is satisfied, a suggestion of the steam option may be displayed in the suggestion area C210.

Although it may vary from country to country, in the period including at least the partial period of July of the year, high temperatures may generally appear, and thus a possibility that sweat is absorbed in the laundry input to the laundry treating apparatus 1 may increase.

That is, the laundry required to be treated during the corresponding period may have a high degree of contamination or a high possibility of bacterial growth based on the temperature. In this case, the steam option may be applied to improve the washing quality or provide a sterilization effect.

That is, in an embodiment of the present disclosure, at least one of the plurality of suggestion content C212 may suggest to the user the application of the steam option as the suggestion condition is satisfied in the period including at least the partial period of July.

However, the period including July is for describing characteristics of the corresponding suggestion. The period may not necessarily be limited to July, but may include various periods such as June and August, and furthermore, the suggestion condition may be satisfied via a current temperature or the like instead of the period having the one year cycle.

In one example, in an embodiment of the present disclosure, when a current time corresponds to a specific time range having a one week cycle, the suggestion condition of at least one of the plurality of suggestion content C212 may be satisfied. That is, in an embodiment of the present disclosure, the suggestion condition may be not only the period having the one year cycle, but also periods having cycles of one week, one day, and the like.

Setting the period having the one week cycle may be advantageous in suggesting to the user option setting based on characteristics of each day of the week. For example, the suggestion condition for the suggestion content C212 may be satisfied in a time range including at least Sunday, and when the suggestion area C210 is selected, the washing strength of the course may be increased.

That is, the suggestion condition may be satisfied within the period including Sunday, and the corresponding suggestion content C212 may suggest to the user to change a setting value of the 'washing strength option' corresponding to the adjustable option to 'strong'.

Sunday may be an off day for members of society, there may be a possibility that the laundry is accumulated over one week, and further, there may be a possibility that the user has more free time on Sunday than other days of the week.

Accordingly, an embodiment of the present disclosure may provide the user with the suggestion content C212 that has a suggestion condition satisfied based on the off day repeated with one week cycle and suggests to the user change of the washing strength option to 'strong' such that strong washing power is provided even when more time is consumed.

As described above, in an embodiment of the present disclosure, the suggestion condition may be set as the specific period range having the one week cycle, so that the option setting based on the characteristics of each day of the week may be provided to the user, thereby effectively improving the convenience of use.

In one example, when the suggestion condition is the specific time range having one day cycle, the suggestion content C212 having the corresponding suggestion condition may provide the user with option setting based on characteristics of each time zone for one day.

For example, when a current time corresponds to the specific time range having one day cycle, the suggestion condition of the suggestion content C212 may be satisfied, and when the suggestion area C210 is selected, the washing strength of the course may be reduced.

For example, the specific time range may include a time indicating a late evening or dawn when people are sleeping. That is, the suggestion content C212 may satisfy the suggestion condition in a time range including midnight, and may suggest to the user change of the setting value of the washing strength option to 'weak'.

A washing course performed during the time period in which people sleep may interfere with sleep via noise and vibration. Accordingly, an embodiment of the present disclosure may suggest to the user to reduce the vibration and the noise by changing the setting value of the washing strength option to the 'weak' during the time period in which people sleep via the suggestion content C212.

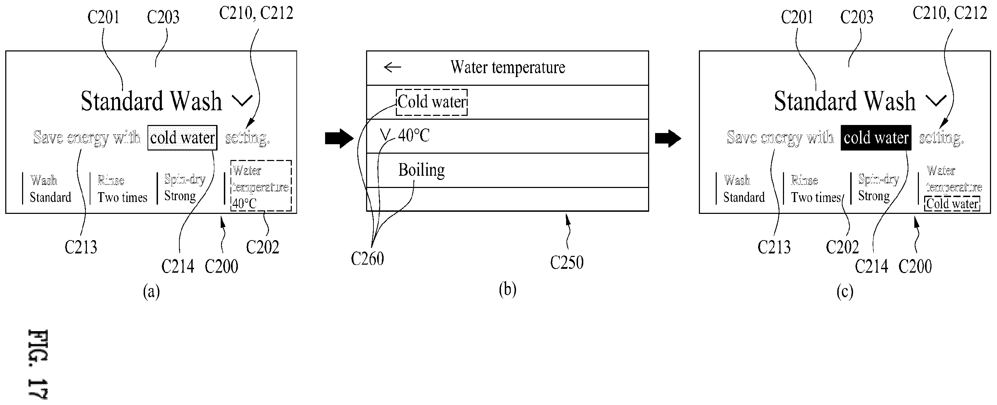

FIG. 17 illustrates a process of changing a setting value of an option via the option setting screen C250 according to an embodiment of the present disclosure.

In an embodiment of the present disclosure, in addition to the simple scheme using the suggestion area C210, a general scheme of outputting the option setting screen C250 to change the setting value of the corresponding option is available.
(a) in FIG. 17 illustrates the course setting screen C200 on which a plurality of adjustable options and setting values thereof are displayed in the option information area C202. When the touch inputter 123 is equipped, that is, when the screen outputter 110 is constructed to sense the touch signal of the user with respect to the screen, the option setting screen C250 may be output by touching the option information area C202.
   In addition, when the option information area C202 may be selected via the button assembly 125 including the above-described movement button and the like in addition to the touch inputter 123, the option setting screen C250 may be output when the option information area C202 is selected via the button assembly 125.
(b) in FIG. 17 shows the option setting screen C250 for an option including a plurality of option values C260. The option including the plurality of option values C260 may be the adjustable option, the adjustable additional option, or the like of the present disclosure, and the option setting screen C250 may display the plurality of option values C260 for the corresponding option to be selectable.

When the touch inputter 123 is equipped, the user may select one of the options displayed in the option setting area on the course setting screen C200 in (a) in FIG. 17 to output the option setting screen C250 for the one option. In addition, the user may select one of the options displayed in the option setting area via the button assembly 125 or the like.

On the option setting screen C250, the user may select one of the plurality of option values C260 and set the same as the setting value of the corresponding option. That is, the user may select one of the plurality of option values C260 and instruct the controller 90 such that the selected one becomes the setting value of the corresponding option.

The user may select one of the plurality of option values C260 by touching the display, or may select one of the plurality of option values C260 using the button assembly 125 or the like.

(c) in FIG. 17 illustrates the course setting screen C200 after one option value C260 is selected on the option setting screen C250. In an embodiment of the present disclosure, when one option value C260 is selected on the option setting screen C250, the screen outputter 110 may output the course setting screen C200 again.

The setting value determined via the option setting screen C250 may be displayed in the option information area C202 of the course setting screen C200. For example, the user may select one option corresponding to the adjustable option in the option information area C202 to output the option setting screen C250 on the screen outputter 110. Further, when one option value C260 is selected on the option setting screen C250, the course setting screen C200 displaying the option having the option value C260 as the setting value may be output on the screen outputter 110.

In the above scheme, the user selects one option while the course setting screen C200 is output, and selects one option value C260 while the option setting screen C250 is output.

The screen of the screen outputter 110 is switched from the course setting screen C200 to the option setting screen C250 and is returned to the course setting screen C200 again from the option setting screen C250.

That is, when the option whose setting value may be changed is set without using the suggestion area C210, the user has to manipulate the inputter 120 a plurality of times, and the screen outputter 110 also has to go through the screen switching process a plurality of times.

In addition, when the user uses the button assembly 125 that sequentially moves between the selectable entities rather than the touch inputter 123, the number of times the user manipulates the inputter 120 may be greatly increased.

However, when the user changes the setting value of the option by selecting the suggestion area C210 according to an embodiment of the present disclosure, the user may perform the setting of the option via only one manipulation and the screen outputter 110 may not need the screen switching process, so that the process for setting the option may be effectively shortened and the convenience may be greatly improved.

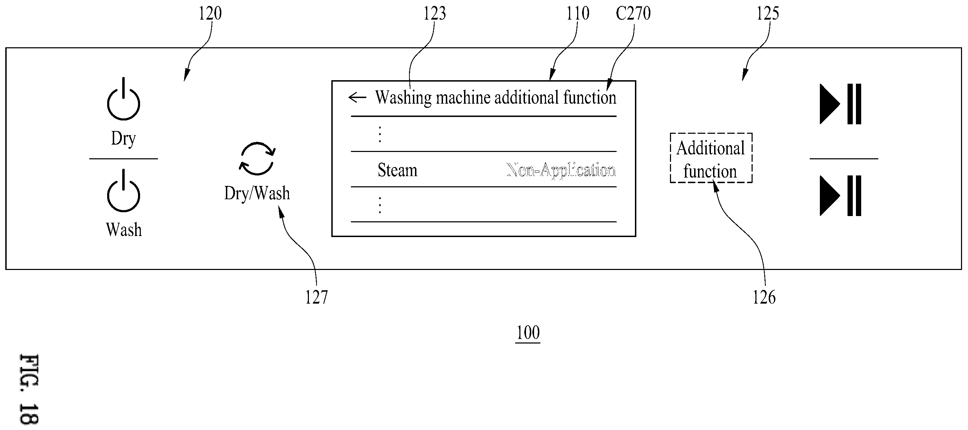

FIG. 18 illustrates the control panel 100 in a state in which an additional function screen C270 for selecting various additional functions is output on the screen outputter 110. The user may allow the additional function screen C270 to be output by manipulating an additional function button 126 disposed on the control panel 100.

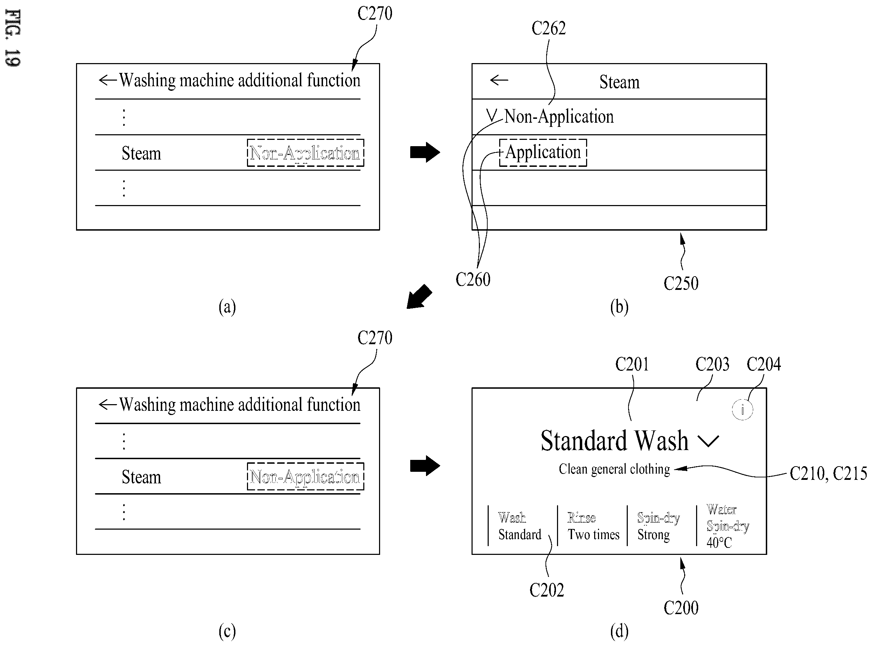

FIG. 19 illustrates a process of setting an option via the additional function screen C270 according to an embodiment of the present disclosure.

A plurality of functions may be listed and displayed on the additional function screen C270, and some of the options according to an embodiment of the present disclosure may be displayed to be selectable on the additional function screen C270. For example, the steam option corresponding to the simple additional option may be displayed to be selectable on the additional function screen C270.
(a) in FIG. 19 illustrates the additional function screen C270 output on the screen outputter 110 as the additional function button 126 is manipulated according to an embodiment of the present disclosure. A plurality of functions are displayed on the additional function screen C270, and some of the plurality of functions may be additional options such as the steam option or the reservation option.
(b) in FIG. 19 illustrates an option setting screen on which an option displayed on the additional function screen C270 is selected by the user and output. (b) in FIG. 19 illustrates the option setting screen C250 for the steam option as an example.

Because the steam option is the simple additional option that does not have the option value C260 that is a candidate for the setting value, two selectable entities corresponding to application and non-application may be displayed on the option setting screen C250.

In other words, an application option value indicating an applied state of the steam option and a release option value C262 indicating non-application or release of the steam option may be displayed on the option setting screen C250 of the steam option.

However, in case of the adjustable additional option that has the plurality of option values C260 that are candidates for the setting value, such as the reservation option, the plurality of option values C260 may be displayed on the option setting screen C250 output via the additional function screen C270.

(c) in FIG. 19 illustrates the additional function screen C270 output on the option setting screen 110 after one entity is selected on the screen outputter C250. In an embodiment of the present disclosure, when one entity is selected on the option setting screen C250, the screen outputter 110 may return to the screen before the output of the option setting screen C250. The entity displayed on the option setting screen C250 refers to a target corresponding to the application or the non-application of the corresponding option or corresponding to the plurality of option values C260.

(c) in FIG. 19 illustrates the additional function screen C270 after the "application" of the option is selected on the option setting screen C250. Whether the option is applied may be displayed on the additional function screen C270.

That is, the user may output the additional function screen C270 via the screen outputter 110 by manipulating the additional function button 126 on the course setting screen C200 or the like, may output the option setting screen C250 by selecting the additional option such as the steam option or the like on the additional function screen C270, and may select one entity on the option setting screen C250 and allow the additional function screen C270 to be returned.

(d) in FIG. 19 illustrates a state in which the screen of the screen outputter 110 is switched from the additional function screen C270 to the course setting screen C200. The user may terminate the additional function screen C270 and return to the course setting screen C200 by manipulating the above-described additional function button 126 or the like while the additional function screen C270 is output.

As described above, in an embodiment of the present disclosure, in addition to the application of the option via the suggestion area C210, an application scheme of the option via the additional function screen C270 may be performed. However, when the additional function screen C270 is used as described above, the screen outputter 110 may have to go through a plurality of complex screen switching processes including the output of the additional function screen C270, the output of the option setting screen C250, the return to the additional function screen C270, and the return to the course setting screen C200.

Furthermore, it may be cumbersome for the user because the number of manipulations on the option setting screen 120 is great, such as manipulating the additional function button 126 a plurality of times, selecting the option on the additional function screen C270, and then selecting the specific entity on the inputter C250 again.

Furthermore, when the user needs to sequentially move between the selectable entities using the movement button or the like, the number of times the user manipulates the inputter 120 may be greatly increased. That is, the process of setting the simple additional option or the like without using the suggestion area C210, like the process of using the additional function screen C270, may be cumbersome and complicated compared to the process of using the suggestion area C210.

In an embodiment of the present disclosure, the simple additional option or the like that may be set via the additional function screen C270 may be set only via the selection of the simple suggestion area C210, thereby improving the option setting process so as to be simple and convenient.

Furthermore, in an embodiment of the present disclosure, as described above, when the suggestion area C210 is selected, the setting value of the option may be changed or the option may be released. That is, an embodiment of the present disclosure may simply and conveniently provide not only the application or the change of the option based on the suggestion content C212, but also the process for restoring the option changed by the suggestion content C212.

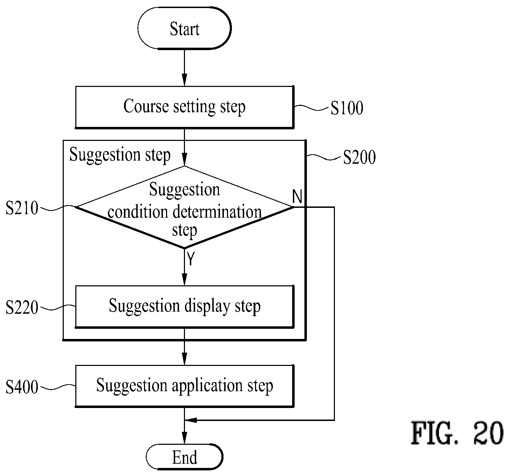

FIG. 20 is a flowchart illustrating a method for controlling the laundry treating apparatus 1 according to an embodiment of the present disclosure. Hereinafter, the method for controlling the laundry treating apparatus 1 will be described with reference to FIG. 20, but redundant content of the above-described characteristics related to the laundry treating apparatus 1 will be omitted as much as possible.

The method for controlling the laundry treating apparatus 1 according to an embodiment of the present disclosure includes a course setting step S100, a suggestion step S200, and a suggestion application step S400.

In the course setting step S100, the course setting screen C200 on which the course for treating the laundry is displayed may be output via the screen outputter 110. The controller 90 may control the screen outputter 110 to output the course setting screen C200 in the course setting process P2 in which the course may be set after the power application to the laundry treating apparatus 1.

In the suggestion step S200, the suggestion content C212 that presents the option changeable or additionally applicable in the course may be displayed in the suggestion area C210 of the course setting screen C200. The option may be the adjustable option or the simple additional option. However, when necessary, the change in the setting value of the adjustable additional option may be suggested. The controller 90 may control the screen outputter 110 such that the suggestion content C212 is displayed in the suggestion area C210 in the suggestion step S200.

In the suggestion application step S400, when the suggestion area C210 is selected, the setting value of the option may be changed or the option may be additionally applied on the course setting screen C200. The option may be displayed in the option information area C202 and the changed setting value may be displayed on the course setting screen C200, or the indicator C204 indicating the applied state of the option may be displayed in the indicator area C203.

When it is determined that the suggestion area C210 has been selected based on the input signal generated by the user in the suggestion application step S400, the controller 90 may change the setting of the option based on the suggestion displayed in the suggestion area C210 or based on the content suggested in the suggestion content C212 for the course displayed on the course setting screen C200.

In the method for controlling the laundry treating apparatus 1 according to an embodiment of the present disclosure, when the suggestion area C210 is selected, the suggestion of the suggestion area C210 may be reflected without switching to the option setting screen C250 or the like, so that the option may be set. This is the same in the laundry treating apparatus 1 according to an embodiment of the present disclosure.

The suggestion step S200 may include a suggestion condition determination step S210. In the suggestion condition determination step S210, the controller 90 may determine whether the suggestion condition for display in the suggestion area C210 of the suggestion content C212 is satisfied.

The suggestion condition may be preset in the controller 90, and the controller 90 may determine whether the suggestion condition for each of the plurality of suggestion content C212 is satisfied in the suggestion condition determination step S210.

That is, the controller 90 may store the plurality of suggestion content C212, and in the suggestion condition determination step S210, the controller 90 may determine whether the suggestion condition of each of the plurality of suggestion content C212 is satisfied.

The suggestion step S200 may include a suggestion display step S220. In the suggestion display step S220, the controller 90 may control the screen outputter 110 to display the suggestion content C212 satisfying the suggestion condition thereof among the plurality of suggestion content C212 in the suggestion area C210 in the suggestion condition determination step S210.

In the suggestion display step S220, when there are the plurality of suggestion content C212 that satisfy the respective suggestion conditions thereof, only one of the suggestion content C212 may be displayed in the suggestion area C210 based on a priority condition preset in the controller 90.

There may be various schemes of determining the priority, but when necessary, the controller 90 may control the screen outputter 110 such that the plurality of suggestion content C212 are displayed together in the suggestion area C210.

An embodiment of the present disclosure may efficiently display the suggestion content C212 on the limited screen by giving the priority to the suggestion content C212. In the suggestion application step S400, the controller 90 may control the screen outputter 110 such that the image of the suggestion area C210 changes by the reflection state of the suggestion content C212.

Furthermore, in the suggestion application step S400, when the suggestion content C212 is reflected, the controller 90 may control the screen outputter 110 such that the color of the suggestion indicator C214 indicating the option is changed in the suggestion area C210.

Although the present disclosure has been illustrated and described with respect to the specific embodiments, it will be apparent to those skilled in the art that the present disclosure may be variously improved and modified without departing from the technical spirit of the present disclosure provided by the following claims.

## Claims

1. A laundry treating apparatus comprising:
a cabinet;
a drum rotatably disposed inside the cabinet and constructed to accommodate laundry therein; and
a screen outputter disposed on the cabinet and configured to output a screen,
wherein the screen outputter is configured to output a course setting screen including a suggestion area where an option changeable or additionally applicable in a course for treating the laundry is presented, wherein when the suggestion area is selected, a setting value of the option is changed or the option is additionally applied on the course setting screen.

2. The laundry treating apparatus of claim 1, wherein the course setting screen further includes an indicator area where an indicator corresponding to the option appears when the option is additionally applied.

3. The laundry treating apparatus of claim 1, wherein the course setting screen further includes an option setting area where the setting value of the option changed as the suggestion area is selected is displayed.

4. The laundry treating apparatus of claim 1, wherein the screen outputter is configured to display a suggestion reflected state for the option in the suggestion area when the suggestion area is selected.

5. The laundry treating apparatus of claim 4, wherein the screen outputter is configured to display a suggestion non-reflected state for the option when the suggestion area is selected again while the suggestion reflected state is displayed.

6. The laundry treating apparatus of claim 1, wherein a suggestion indicator indicating the option is displayed in the suggestion area,
wherein the suggestion indicator is displayed as different images before and after the selection of the suggestion area.

7. The laundry treating apparatus of claim 6, wherein the suggestion indicator has different colors in an active state and an inactive state of the suggestion area.

8. The laundry treating apparatus of claim 6, wherein the suggestion indicator is displayed as a flickering motion with different colors alternately applied when the suggestion area is selected.

9. The laundry treating apparatus of claim 1, wherein a suggestion indicator indicating the option and a suggestion phrase for suggesting the option are displayed in the suggestion area.

10. The laundry treating apparatus of claim 9, wherein the suggestion indicator is defined by including at least a part of the suggestion phrase.

11. The laundry treating apparatus of claim 10, wherein the suggestion indicator includes a border for distinguishing the at least part of the suggestion phrase and a rest thereof from each other.

12. The laundry treating apparatus of claim 1, wherein the screen outputter is configured to sense a touch signal of a user for the screen, wherein when the touch signal is generated in at least a portion of the suggestion area, the setting value of the option is changed or the option is additionally applied and displayed.

13. The laundry treating apparatus of claim 1, further comprising an inputter disposed on the cabinet and configured to generate an input signal of a user for selecting the suggestion area.

14. The laundry treating apparatus of claim 1, further comprising a button assembly disposed on the cabinet and manipulated by a user to generate an input signal,
wherein the suggestion area is selected based on the input signal.

15. The laundry treating apparatus of claim 1, wherein the screen outputter is configured to display suggestion content including a name of the option or a phrase suggesting the option in the suggestion area,
wherein the suggestion content includes a plurality of suggestion content having different suggestion conditions to be displayed in the suggestion area.

16. The laundry treating apparatus of claim 15, wherein when a plurality of suggestion content among the plurality of suggestion content satisfy respective suggestion conditions thereof, one is displayed in the suggestion area based on a priority.

17. The laundry treating apparatus of claim 15, wherein the suggestion content has a unit of one year and satisfies the suggestion condition when a current time corresponds to a specific time range within the one year.

18. The laundry treating apparatus of claim 17, wherein the specific time range includes at least a portion of July of the one year, and the option corresponds to a steam option for the course.

19. The laundry treating apparatus of claim 15, wherein the suggestion content has a unit of one week and satisfies the suggestion condition when a current time corresponds to a specific time range within the one week.

20. The laundry treating apparatus of claim 19, wherein the specific time range includes at least Sunday of the one week, and a washing strength of the course is increased when the suggestion area is selected.

21. The laundry treating apparatus of claim 15, wherein the suggestion content has a unit of one day and satisfies the suggestion condition when a current time corresponds to a specific time range within the one day, wherein when the suggestion area is selected, a washing strength of the course is reduced.

22. A laundry treating apparatus comprising:
a cabinet;
a drum rotatably disposed inside the cabinet and constructed to accommodate laundry therein; and
a screen outputter disposed on the cabinet and configured to output a screen,
wherein the screen outputter is configured to output a course setting screen including a suggestion area where an option changeable or releasably applied in a course for treating the laundry is presented, wherein when the suggestion area is selected, a setting value of the option is changed or the option is released and displayed.

23. A method for controlling a laundry treating apparatus including a cabinet, a drum rotatably disposed inside the cabinet and constructed to accommodate laundry therein, and a screen outputter disposed on the cabinet and configured to output a screen, the method comprising:
a course setting operation of outputting a course setting screen where a course for treating the laundry is displayed via the screen outputter;
a suggestion operation of displaying suggestion content presenting an option changeable or additionally applicable in the course in a suggestion area of the course setting screen; and
a suggestion application operation of changing a setting value of the option or additionally applying the option on the course setting screen when the suggestion area is selected.

24. The method of claim 23, wherein the suggestion operation includes a suggestion condition determination operation of determining, by a controller, whether a suggestion condition for displaying the suggestion content in the suggestion area is satisfied,
wherein the suggestion content includes a plurality of suggestion content and the controller stores the plurality of suggestion content therein, wherein in the suggestion condition determination operation, the controller is configured to determine whether a suggestion condition of each of the plurality of suggestion content is satisfied.

25. The method of claim 24, wherein the suggestion operation further includes a suggestion display operation of controlling, by the controller, the screen outputter such that suggestion content satisfying a suggestion condition thereof among the plurality of suggestion content in the suggestion condition determination operation is displayed in the suggestion area,
wherein in the suggestion display operation, when there are a plurality of suggestion content satisfying respective suggestion conditions thereof, the controller is configured to display only one in the suggestion area based on a preset priority condition.

26. The method of claim 23, wherein in the suggestion application operation, the controller is configured to control the screen outputter such that an image of the suggestion area is changed by a reflection state of the suggestion content.

27. The method of claim 26, wherein in the suggestion application operation, the controller is configured to control the screen outputter such that a color of a suggestion indicator indicating the option in the suggestion area is changed when the suggestion content is reflected.
